# EUROPEAN PATENT APPLICATION

(11) **EP 1 974 808 A1**
(43) Date of publication of application: **01.10.2008**
(21) Application number: 06834810.1
(22) Date of filing: 15.12.2006
(51) Int. Cl.: B01J 20/06, A23L 3/3436, B01D 53/14

(54) **OXYGEN SCAVENGER AND PROCESS FOR PRODUCING OXYGEN SCAVENGER**

(30) Priority: 15.12.2005 JP 2005362316; 27.01.2006 JP 2006019701
(71) Applicant: MITSUI MINING & SMELTING CO., LTD., Tokyo 141-8584 (JP)
(72) Inventor: KINOSHITA, Kazuya, MITSUI MINING & SMELTING CO., LTD., Ageo-shi, Saitama 3620021 (JP); YASHIMA, Isamu, MITSUI MINING & SMELTING CO., LTD., Ageo-shi, Saitama 3620021 (JP)
(74) Representative: Forstmeyer, Dietmar
(86) International application number: PCT/JP2006/325083
(87) International publication number: WO 2007/069735

(57) **Abstract**

A deoxidizer for absorbing and removing oxygen from the surrounding atmosphere, comprising oxygen-deficient cerium oxide having a powder form with a specific surface area of 0.6 m²/g or less or the form of a formed body with a specific surface area of 3.0 m²/g or less. The deoxidizer reacts with oxygen even in a moisture-free atmosphere, does not trigger a metal detector nor heat up when microwaved in a microwave oven, and is prevented from abruptly reacting with oxygen and igniting even when brought into direct exposure to the air. The deoxidizer is therefore suited for oxygen removal, for example, inside food packages.

## Description

### Technical Field

This invention relates to a deoxidizer that absorbs and removes oxygen from the surrounding atmosphere and a process of producing the same.

### Background Art

To cope with the recent strong demand for safety and quality maintenance of foods, it has been a practice to make the inner atmosphere of food packages oxygen-free to minimize deterioration of foods by oxidation. More specifically, a deoxidizer that absorbs oxygen in the environment is co-packaged with a food so that the deoxidizer removes residual oxygen inside the package thereby to make the inner atmosphere oxygen-free. Furthermore, co-packaging a food and a deoxidizer is carried out in an oxygen-free inert gas atmosphere so as to prevent oxygen entrapment into the package, and a trace amount of oxygen that may penetrate through the packaging material is removed by the co-packaged deoxidizer.

The deoxidizers that have thus been used to remove oxygen in an environment are divided into organic materials and inorganic materials. Iron-based deoxidizers, which are inorganic materials, are predominant from the economical standpoint. Iron-based deoxidizers react with environmental oxygen and a trace amount of water in the environment according to chemical formula (1) below thereby to remove oxygen from the environment.

Fe + 1/2H₂O + 3/4O₂ → FeOOH (1)

Use of conventional iron-based deoxidizers as described involves the following problems.
(1) Since they need the presence of a little water in reacting with oxygen, they are unable to perform their fullest function when applied to the storage of dry foods or products that should be stored in the absence of moisture, such as electronic components and solder powder.
(2) When a food package having a food and a conventional iron-based deoxidizer co-packaged in an inert gas atmosphere is inspected for the presence of foreign matter such as metal, the iron powder of the deoxidizer would set off a metal detector, providing a hindrance to carrying out simple inspection.
(3) They heat up abruptly and ignite when microwaved, e.g., in a microwave oven.

In an attempt to solve the above problems, deoxidizers based on inorganic oxides such as titanium oxide and cerium oxide have been proposed in place of the iron-based deoxidizers as, e.g., in Patent Documents 1 to 5.

| | |
|---|---|
| Patent Document 1 | JP 2005-104064A |
| Patent Document 2 | JP 2005-105194A |
| Patent Document 3 | JP 2005-105195A |
| Patent Document 4 | JP 2005-105199A |
| Patent Document 5 | JP 2005-105200A |

### Disclosure of the Invention

### Problems to be Solved by the Invention

Deoxidizers containing titanium oxide as a sole inorganic oxide have a disadvantage of insufficient oxygen absorptivity compared with the iron-based deoxidizers.

Deoxidizers containing cerium oxide as an inorganic oxide have a handling problem because of the ignitability of cerium oxide; that is, the deoxidizer must be packaged in a low-oxygen atmosphere or an inert gas atmosphere or the packaging must be completed rapidly.

In the light of the above problems, an object of the present invention is to provide a deoxidizer having improved oxygen absorptivity over titanium oxide and improved handling properties and a process of producing the deoxidizer.

### Means for Solving the Problem

The invention provides in its first aspect a deoxidizer for absorbing and removing oxygen from the surrounding atmosphere. The deoxidizer comprises oxygen-deficient cerium oxide having a powder form with a specific surface area of 0.6 m²/g or less.

The invention also provides in its second aspect a deoxidizer for absorbing and removing oxygen from the surrounding atmosphere. The deoxidizer comprises oxygen-deficient cerium oxide having the form of a formed body with a specific surface area of 3.0 m²/g or less.

The invention also provides in its third aspect a deoxidizer for absorbing and removing oxygen from the surrounding atmosphere. The deoxidizer comprises an oxygen-deficient inorganic oxide doped with a dopant element which is capable of increasing the oxygen absorption of the inorganic oxide.

The invention provides a preferred embodiment of the deoxidizer of the third aspect, in which the inorganic oxide is cerium oxide, and the dopant element is at least one of yttrium (Y), calcium (Ca), and praseodymium (Pr) dissolved in the cerium oxide in a solid state.

The invention provides another preferred embodiment of the third aspect, in which the inorganic oxide is cerium oxide, and the dopant element is at least one of yttrium (Y), calcium (Ca), and praseodymium (Pr) dissolved in an amount of 1 to 20 mol% in the cerium oxide in a solid state.

The invention provides still another preferred embodiment of the third aspect, in which the deoxidizer has a powder form having a specific surface area of 0.6 m²/g or less.

The invention provides still another preferred embodiment of the third aspect, in which the deoxidizer has the form of a formed body having a specific surface area of 3.0 m²/g or less.

The invention also provides in its fourth aspect a process of producing the deoxidizer according to the first aspect. The process includes the steps of firing CeO₂ powder at 1400°C or higher temperatures and subjecting the fired powder to reduction firing.

The invention also provides in its fifth aspect a process of producing the deoxidizer according to the second aspect. The process includes the steps of forming CeO₂ powder under a pressure of 0.5 t/cm² or more into a formed body, sintering the formed body at 1000°C or higher temperatures, and subjecting the sintered body to reduction firing.

The invention also provides in its sixth aspect a process of producing the deoxidizer according to the third aspect. The process includes the steps of firing a composite inorganic oxide containing a dopant element increasing oxygen absorption at 1000°C or higher temperatures, subjecting the fired product to reduction firing, and sealing the product in a packet.

The invention provides a preferred embodiment of the process according to the sixth aspect, in which the process further includes the step of pressing the composite inorganic oxide into a formed body before the step of firing at 1000°C or higher.

The invention provides another preferred embodiment of the process according to the sixth aspect, in which the inorganic oxide is cerium oxide, and the dopant element is at least one of yttrium (Y), calcium (Ca), and praseodymium (Pr) dissolved in the cerium oxide in a solid state.

The invention also provides in its seventh aspect a deoxidizer packet comprising a casing and a deoxidizer in the casing. The deoxidizer comprises oxygen-deficient cerium oxide powder having a specific surface area of 0.6 m²/g or less.

The invention also provides in its eighth aspect a deoxidizer packet comprising a casing and a deoxidizer in the casing. The deoxidizer comprises a formed body of oxygen-deficient cerium oxide. The formed body has a specific surface area of 3.0 m²/g or less.

The invention also provides in its ninth aspect a deoxidizing film comprising a deoxidizer layer made of oxygen-deficient cerium oxide powder having a specific surface area of 0.6 m²/g or less, a gas barrier layer having gas barrier properties and provided on the outer side of the deoxidizer layer, and a gas permeable layer having gas permeability and provided on the inner side of the deoxidizer layer.

The invention also provides in its tenth aspect a deoxidizing resin composition comprising a resin having gas permeability and a deoxidizer dispersed or kneaded into the resin. The deoxidizer comprises oxygen-deficient cerium oxide powder having a specific surface area of 0.6 m²/g or less.

The invention also provides in its eleventh aspect a deoxidizer packet comprising a casing and a deoxidizer in the casing. The deoxidizer comprises an oxygen-deficient inorganic oxide doped with a dopant element that increases the oxygen absorption of the inorganic oxide.

The invention provides a preferred embodiment of the eleventh aspect, in which the inorganic oxide is cerium oxide, and the dopant element is at least one of yttrium (Y), calcium (Ca), and praseodymium (Pr) dissolved in the cerium oxide in a solid state.

The invention also provides in its twelfth aspect a deoxidizing film comprising a deoxidizer layer, a gas barrier layer having gas barrier properties and provided on the outer side of the deoxidizer layer, and a gas permeable layer having gas permeability and provided on the inner side of the deoxidizer layer. The deoxidizer layer is formed of an oxygen-deficient inorganic oxide doped with a dopant element that increases the oxygen absorption of the inorganic oxide.

The invention provides a preferred embodiment of the twelfth aspect, in which the inorganic oxide is cerium oxide, and the dopant element is at least one of yttrium (Y), calcium (Ca), and praseodymium (Pr) dissolved in the cerium oxide in solid state.

The invention also provides in its thirteenth aspect a deoxidizing resin composition comprising a resin having gas permeability and a deoxidizer dispersed or kneaded into the resin. The deoxidizer comprises an oxygen-deficient inorganic oxide doped with a dopant element that increases the oxygen absorption of the inorganic oxide.

The invention provides a preferred embodiment of the thirteenth aspect, in which the inorganic oxide is cerium oxide, and the dopant element is at least one of yttrium (Y), calcium (Ca), and praseodymium (Pr) dissolved in the cerium oxide in a solid state.

### Effect of the Invention

The deoxidizer according to the present invention, having the form of powder with a specific surface area of 0.6 m²/g or less or a formed body with a specific surface area of 3.0 m²/g or less, is prevented from abruptly reacting with oxygen and igniting even when brought into direct exposure to the atmosphere.

The process of producing a deoxidizer according to the invention easily produces a deoxidizer that is prevented from rapidly reacting to oxygen and igniting even when brought into direct exposure to the atmosphere.

The deoxidizer of the invention, having incorporated therein a dopant element increasing the oxygen absorption, has higher oxygen absorptivity than a deoxidizer comprising a pure cerium oxide.

### Brief Description of the Drawings

[Fig.1] Fig. 1 shows the ionic radius of dopant elements.
[Fig.2] Fig. 2 is a graph showing the results of oxygen absorptivity test on sample A5 in Example of the deoxidizer of the invention.
[Fig.3] Fig. 3 is a graph showing the results of oxygen absorptivity test on samples B10, B11, B 17, and B 18 in Example of the deoxidizer of the invention.
[Fig.4] Fig. 4 is a graph of oxygen absorption vs. time with the dopant element added varied.
[Fig.5] Fig. 5 is a graph of oxygen absorption vs. time with the amount of yttrium (Y) added as a dopant element varied.
[Fig.6] Fig. 6 is a graph of oxygen absorption vs. time with the amount of calcium (Ca) added as a dopant element varied.
[Fig.7] Fig. 7 is a graph of oxygen absorption vs. time with the amount of praseodymium (Pr) added as a dopant element varied.
[Fig.8] Fig. 8 is a schematic view of a deoxidizing film.
[Fig.9] Fig. 9 is a schematic view of a deoxidizer packet.
[Fig.10] Fig. 10 is a schematic view of a deoxidizing resin composition.

### Description of Reference Numerals

- 10: Deoxidizing film
- 42: Deoxidizer packet
- 44: Deoxidizing resin composition

### Best Mode for Carrying out the Invention

The present invention will be described in detail with reference to the accompanying drawing. The embodiments and working examples hereinafter given are not construed as limiting the invention. The constituent elements in the embodiments and examples include those easily anticipated by artisans and their substantial equivalents.

### [I] First Embodiment

The deoxidizer according to the first embodiment of the invention will be described. The deoxidizer of the first embodiment comprises oxygen-deficient cerium oxide as represented by CeOₓ, where x is a positive number smaller than 2, and having the form of powder with a specific surface area of 0.6 m²/g or less or of a formed body with a specific surface area of 3.0 m²/g or less.

The deoxidizer of the present embodiment reacts with oxygen in the surrounding atmosphere in accordance with chemical formula (2):

CeOₓ+((2-x)/2)O₂→CeO₂ (2)

Oxygen-deficient cerium oxide (CeOₓ, where x is a positive number smaller than 2) is the result of high-temperature reduction, during which oxygen has been removed from the crystal lattice to create an oxygen vacancy. Since oxygen-deficient cerium oxide reacts with oxygen in the atmosphere as represented by chemical formula (2), it produces the effect as a deoxidizer.

Examples of inorganic oxides include not only cerium oxide (CeO₂) but titanium oxide (TiO₂) and zinc oxide (ZnO). The reasons for choosing cerium oxide (CeO₂) are as follows.
(1) Using titanium oxide (TiO₂) as an inorganic oxide raises the problem of insufficient oxygen removal capability for use as a deoxidizer because the oxygen removing capability of titanium oxide is about one-sixth of that of cerium oxide (CeO₂) as will be demonstrated in Examples.
(2) Cases occur in which zinc oxide (ZnO) sublimates during reduction firing to contaminate the furnace. Therefore, large-volume production of a deoxidizer from zinc oxide on an industrial scale is problematical.

Having the form of powder with a specific surface area of 0.6 m²/g or less or the form of a formed body (e.g., tablet, pellet or flake) with a specific surface area of 3.0 m²/g or less, the deoxidizer is very favorable because it is prevented from rapidly reacting with oxygen and igniting even if brought into direct exposure to the air when, for example, a composite film covering the deoxidizer is opened by mistake.

The problem due to the ignitability of cerium oxide is thus settled down. This means that it is no more necessary to carry out co-packaging the deoxidizer with a product rapidly or in a low-oxygen or an inert gas atmosphere. The handling properties are markedly improved as a result.

The deoxidizer cannot be prevented from igniting unless the specific surface area is 0.6 m²/g or less in the case of powder, while the deoxidizer is prevented from igniting with its specific surface area being 3.0 m²/g or less in the case of the formed body such as tablets, pellets or flakes. Although the reason for this is not clear, the following assumption can be made. The air can diffuse through micropores formed inside a formed body only in Knudsen flow (Gas diffuses in pores ranging in diameter from about several to a hundred nanometers (mesopores) while colliding against the wall, which is called Knudsen flow. In Knudsen flow, gas is not allowed to diffuse relatively freely in a large amount as compared in general big pores.). Therefore, even with a large specific surface area, the effective surface area that exposes to oxygen in the air is not so large.

The deoxidizer of powder form with a specific surface area of 0.6 m²/g or less can easily be produced by firing CeO₂ powder at a temperature of 1400°C or higher for, e.g., 1 hour and then further firing the powder in a reducing gas (e.g., hydrogen) stream, e.g., at 1000°C for 1 hour.

The deoxidizer of formed body form (e.g., tablet, pellet or flake) with a specific area of 3.0 m²/g or less can easily be produced by pressing CeO₂ powder into a formed body under a pressure of 0.5 t/cm² or more, sintering the formed body at a temperature of 1000°C or higher, and firing the sintered body in a reducing gas (e.g., hydrogen) stream at, e.g., 1000°C for 1 hour.

The resulting deoxidizer is sealed in a conventional covering material having sufficient oxygen permeability, such as a porous composite film, to be ready for use.

The deoxidizer of the present embodiment is capable of removing oxygen from the surrounding atmosphere through the reaction with oxygen in the atmosphere as represented by formula (2).

The deoxidizer of the present embodiment provides the following advantages. (1) It can react with oxygen in the absence of moisture. Therefore, it produces the effect even when applied to the packages of dry foods or products that should be stored in the absence of moisture, such as electronic components and solder powder. (2) Being non-metallic, it does not set off a metal detector. (3) It does not ignite when microwaved in a microwave oven together with a food.

Accordingly, the present embodiment provides a deoxidizer that reacts with oxygen even in a moisture-free atmosphere, does not trigger a metal detector nor heat when microwaved in a microwave oven.

### [II] Second Embodiment

The deoxidizer according to the second embodiment of the invention will be described.

The second embodiment of the invention is a deoxidizer for absorbing and removing oxygen from the surrounding atmosphere. The deoxidizer comprises an oxygen-deficient inorganic oxide doped with a dopant element that is capable of increasing the oxygen absorption of the inorganic oxide.
Examples of the inorganic oxide that can be used in the present invention include cerium oxide, titanium oxide, zinc oxide, and a mixture of two or more thereof. It is particularly preferred to use cerium oxide as the inorganic oxide because of its high oxygen absorbing capability when used alone. The dopant element that can be added to the inorganic oxide is not limited as long as it increases the oxygen absorption of the inorganic oxide when added thereto. Dopant elements the ionic radius of which is close to that of the inorganic oxide are preferred.

The description of the second embodiment will be focused on the case of using cerium oxide as an inorganic oxide.
Oxygen-deficient cerium oxide (CeOₓ, where x is a positive number smaller than 2) is the result of high-temperature reduction, during which oxygen has been removed from the crystal lattice to create an oxygen vacancy. Since oxygen-deficient cerium oxide reacts with oxygen in the environment as represented by chemical formula (2), it produces the effect as a deoxidizer.

Similarly to the deoxidizer of the first embodiment, the cerium oxide-based deoxidizer of powder form with a specific surface area of 0.6 m²/g or less may be produced by firing CeO₂ powder at a temperature of 1400°C or higher for, e.g., 1 hour and then further firing the powder in a reducing gas (e.g., hydrogen) stream, e.g., at 1000°C for 1 hour.

The deoxidizer of formed body form (e.g., tablet, pellet or flake) with a specific area of 3.0 m²/g or less may be produced by pressing CeO₂ powder into a formed body under a pressure of 0.5 t/cm² or more, sintering the formed body at a temperature of 1000°C or higher, and firing the sintered body in a reducing gas (e.g., hydrogen) stream at, e.g., 1000°C for 1 hour.

In the present invention, a specific dopant element is added to the system of preparing an oxide (cerium oxide) to make a composite oxide having the dopant element in the form of a substitutional solid solution thereby to greatly increase the oxygen absorption of oxygen-deficient cerium oxide. The specific dopant element is preferably at least one of yttrium (Y), calcium (Ca), and praseodymium (Pr). The dopant element is incorporated in the preparation of cerium oxide powder to prepare a cerium/dopant composite oxide.

Seeing that deoxidizers generally find extensive use in food packages, they are required to have safety for application to foods. Examples of dopant elements useful from the safety standpoint include titanium, zirconium, magnesium, yttrium, calcium, praseodymium, lanthanum, and strontium. Inter alia, doping with yttrium, calcium and praseodymium each having an ionic radius slightly smaller than that of cerium (III) (1.143 Å) brings about oxygen absorption enhancement as will be demonstrated in Examples given later.

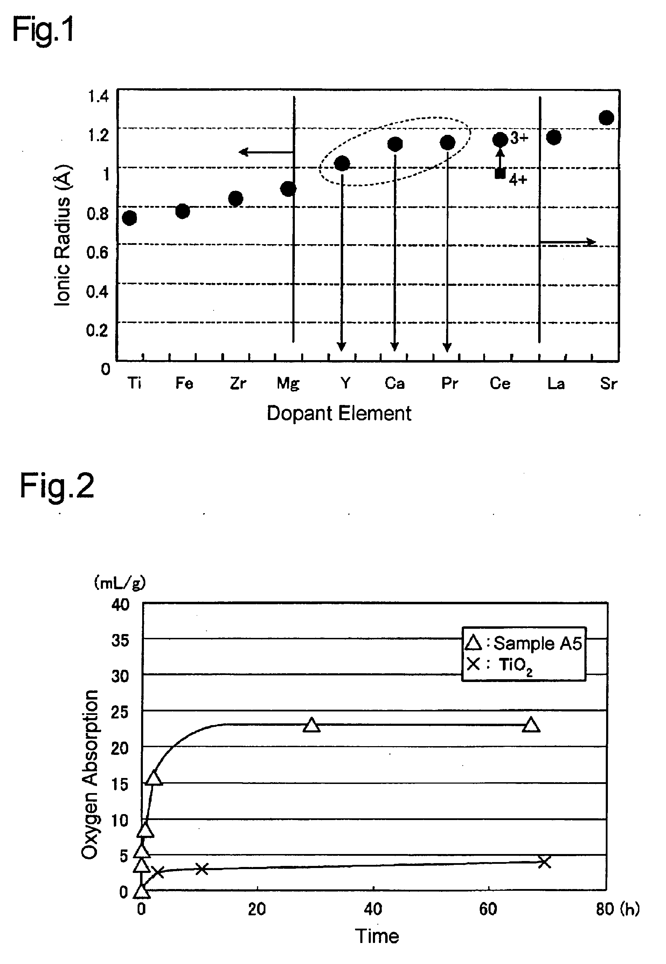

Ionic radii of metal elements added are shown in Table 1 below, which is graphically represented in Fig. 1.

**Table 1**

| | Valence | Ionic Radius (A) |
|---|---|---|
| Ti | 4+ | 0.74 |
| Fe | 3+ | 0.78 |
| Zr | 4+ | 0.84 |
| Mg | 2+ | 0.89 |
| Y | 3+ | 1.02 |
| Ca | 2+ | 1.12 |
| Pr | 3+ | 1.126 |
| | 4+ | 0.96 |
| Ce | 3+ | 1.143 |
| | 4+ | 0.97 |
| La | 3+ | 1.16 |
| Sr | 2+ | 1.26 |

The mechanism of the oxygen absorption enhancement by the doping with these specific dopant elements is as follows. Cerium in cerium oxide is usually tetravalent (4+) but changes its valency to trivalent (3+) on being reduced in high temperature. The ionic radius of cerium oxide expands with the change of valency number, and the crystal lattice itself expands. However, since yttrium, calcium, and praseodymium have a smaller ionic radius than the expanded, trivalent cerium ion, addition of any of them is effective to control the expansion. As a result, more oxygen vacancies can be retained.

The amount of the dopant element to be added is preferably 1 to 20 mol%. Addition of less than 1 mol% brings about only a small effect of addition. Generally speaking, addition of an element showing a little or no change in valency to cerium oxide does not produce the oxygen absorption increasing effect, but, when the above-recited dopant element (Y, Ca, Pr) with a specific ionic radius is added in an amount of up to about 20 mol%, it performs sufficiently the function to suppress expansion of the fluorite type crystal lattice of cerium oxide, thereby to enhance the oxygen absorption.

The above-described deoxidizer of powder form can easily be produced by firing a composite oxide of cerium oxide containing a dopant element at 1400°C or higher temperatures for about 1 hour, and further firing the product in a reducing gas (e.g., hydrogen) stream, e.g., at 1000°C for 1 hour.

The deoxidizer of formed body form (e.g., tablet or flake) can easily be produced by pressing a composite oxide powder of cerium oxide containing a dopant element under a prescribed pressure (e.g., 0.5 t/cm² or more) into a formed body, sintering the formed body at a temperature of 1000°C or higher, and further sintering the sintered body in a reducing gas (e.g., hydrogen) stream at, e.g., 1000°C for 1 hour.

The resulting deoxidizer is sealed by, for example, lamination using a known covering material for deoxidizers having sufficient oxygen permeability, such as a porous film, to be ready for use.

The deoxidizer of the present embodiment is capable of absorbing and removing considerable amount of oxygen from the surrounding atmosphere through the reaction with oxygen in the atmosphere as represented by chemical formula (2).

The cerium oxide-based deoxidizer of the present embodiment provides the following advantages. (1) It can react with oxygen in the absence of moisture. Therefore, it produces the effect even when used for the storage of products that should be stored in a moisture-free environment, such as dry foods, electronic components, and solder powder. (2) The doped cerium oxide, being non-metallic, does not set off a metal detector so that it allows for inspection for foreign matter incorporated into foods by use of a metal detector. (3) The deoxidizer comprising cerium oxide doped with a dopant element increasing the oxygen absorption has high resistance to microwaves and is therefore prevented from heating during microwave cooking. (4) Addition of the dopant element to cerium oxide results in increase of oxygen absorbing capacity. As a result, the doped cerium oxide achieves a markedly increased oxygen absorption per unit weight compared with cerium oxide alone.

Accordingly, the present embodiment provides a deoxidizer that achieves a markedly increased oxygen absorption compared with cerium oxide alone as an inorganic oxide.

### [III] Third Embodiment

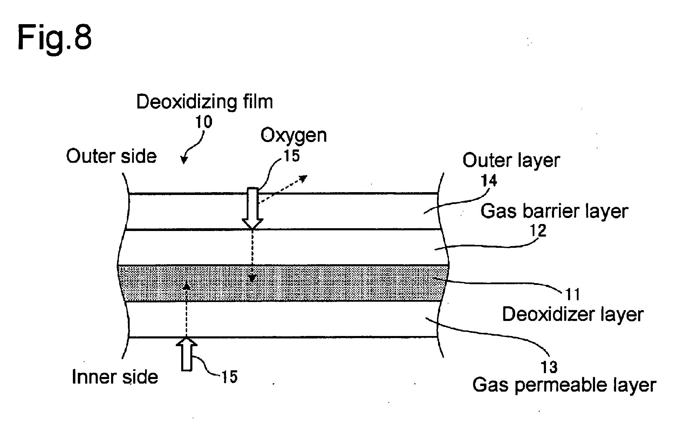

The deoxidizers according to the first and second embodiments may be used in the form of a deoxidizing film 10 as illustrated in Fig. 8. The deoxidizing film includes a deoxidizer layer 11 comprising the cerium oxide with the above specified specific surface area or the inorganic oxide doped with an element increasing the oxygen absorption, a gas barrier layer 12 having gas barrier properties and provided on the outer side of the deoxidizer layer 11, and a gas permeable layer 13 having gas permeability and provided on the inner side of the deoxidizer layer 11. Reference numeral 15 in Fig. 8 indicates oxygen. In the particular embodiment shown in Fig. 8, an outer layer 14 is provided outside the gas barrier layer 12 to protect the gas barrier layer.
Examples of the gas barrier layer 12 include, but are not limited to, aluminum foil, polyethylene terephthalate (PET), polyethylene (PE), oriented polypropylene (PP), polyvinyl alcohol, polyethylene, and polyvinylidene chloride-coated oriented nylon (trade name), used either individually or as a composite laminate thereof.

Examples of the gas permeable layer 13 include, but are not limited to, polyethylene terephthalate (PET), polyethylene (PE), oriented polypropylene (PP), polyvinyl alcohol, polyethylene, and polyvinylidene chloride-coated oriented nylon (trade name), used either individually or as a composite laminate thereof. Fibrous layers such as paper and nonwoven fabric are also useful.
The gas permeable layer 13 may be designed to have the function as a sealant layer (e.g., polyolefin such as PP or PE).

Examples of the outer layer 14 include, but are not limited to, polyethylene terephthalate (PET) and nylon (trade name).

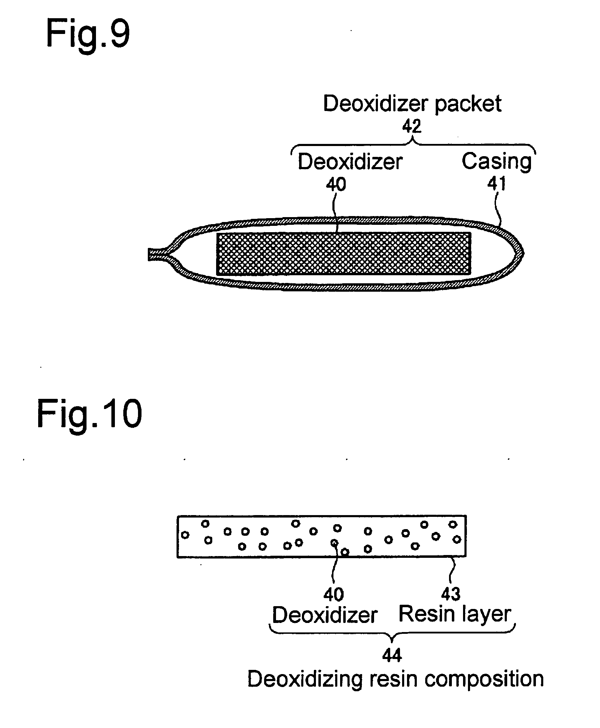

The deoxidizer 40 comprising the cerium oxide with the above specified specific surface area or the inorganic oxide doped with an element increasing the oxygen absorption may be used in the form of a deoxidizer packet 42 as illustrated in Fig. 9. The deoxidizer packet 42 of Fig. 9 includes a casing 41 having gas barrier properties and a deoxidizer 40 enclosed in the casing 41.

As illustrated in Fig. 10, the deoxidizer 40 comprising the cerium oxide with the above specified specific surface area or the inorganic oxide doped with an element increasing the oxygen absorption may be dispersed or kneaded into a resin layer 43 to provide a deoxidizing resin composition 44.

Any material permeable to oxygen can be used as the resin making the resin layer 43. Illustrative examples of such materials include polyolefin resins such as low density polyethylene, middle density polyethylene, high density polyethylene, polypropylene, propylene-ethylene copolymers, ethylene-vinyl acetate copolymers, and polyblends thereof; and styrene resins such as polystyrene, styrene-butadiene copolymers, and styrene-isoprene copolymers. The recited resins may be used either individually or as a mixture thereof.

### Example 1

The effects of the deoxidizers according to the first embodiment of the invention and the process of producing them were confirmed by the following confirming tests.

### 1-1. Preparation of starting material

Ammonium hydrogencarbonate, ammonia, ammonium carbonate, and tartaric acid were dissolved in water, and a cerium nitrate aqueous solution was added thereto dropwise while stirring to conduct back neutralization. The precipitate thus formed was washed twice with ion-exchanged water, filtered, and dried at 300°C for 2 hours to give cerium oxide (CeO₂) powder having an average particle size of about 0.5 µm.

### 1-2. Preparation of fired powders A 1 to A6 and B1 to B 18

The cerium oxide (CeO₂) powder was fired at the temperature shown in Table 2 below to obtain fired powders A 1 to A6 having an average particle size of about 5 to 10 µm.
On the other hand, the cerium oxide (CeO₂) powder was pressed under the pressure shown in Table 2 into a tablet (a formed body) having a diameter of 2 cm and a thickness of about 2 mm and weighing about 2 g. The tablet was then sintered at the temperature shown in Table 3 to prepare sintered bodies B1 to B 18 having a diameter of about 1.7 cm and a thickness of about 1.7 mm.

**Table 2**

| Sample | Firing Temperature (°C) |
|---|---|
| A1 | 900 |
| A2 | 1100 |
| A3 | 1200 |
| A4 | 1300 |
| A5 | 1400 |
| A6 | 1500 |

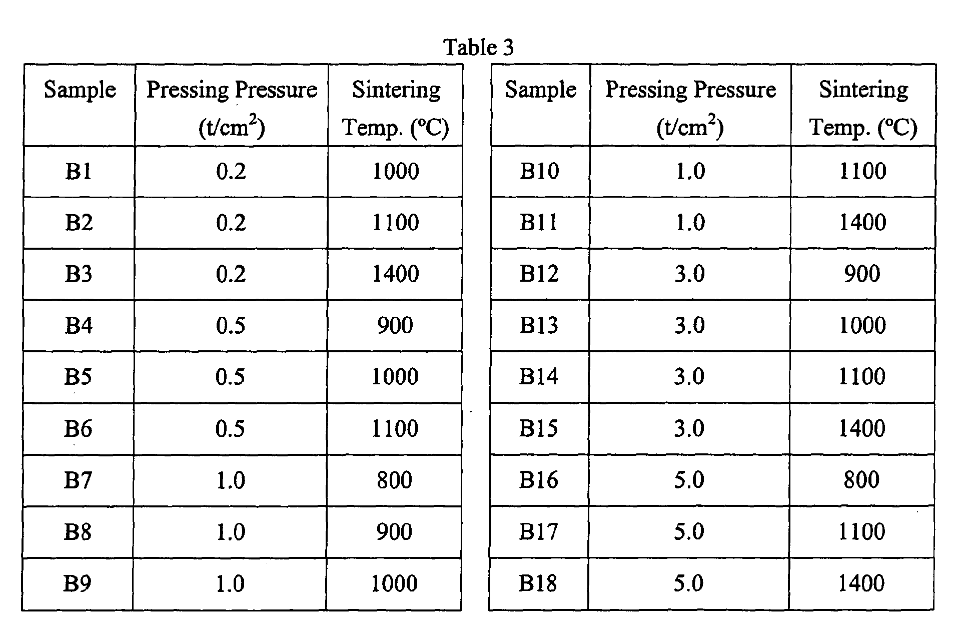

### 1-3. Preparation of samples A1 to A6 (powder) and B1 to B18 (formed body)

The fired powders A1 to A6 and sintered bodies B1 to B18 were subjected to reduction firing by heating at 1000°C in an inert gas (nitrogen) atmosphere while introducing a reducing gas (hydrogen) at 400 sccm for 1 hour to form oxygen vacancies, followed by cooling. Then the fired powders A 1 to A6 and sintered bodies B1 to B 18 (about 2 g) were enclosed in a composite film to prepare samples A1 to A6 (powders) and B1 to B 18 (formed bodies).

The composite film used was a laminate having in this order an oriented nylon (ON) layer (30 µm thick), a paper and a non-oriented cast polypropylene (CPP) layer (40 µm thick). The composite film was provided with many pinholes for the passage of oxygen. Then the fired powders A1 to A6 and sintered bodies B1 to B18 were enclosed in the composite film with its CPP layer inside to prepare samples A1 to A6 and B1 to B 18.

### 2-1. Oxygen absorptivity test

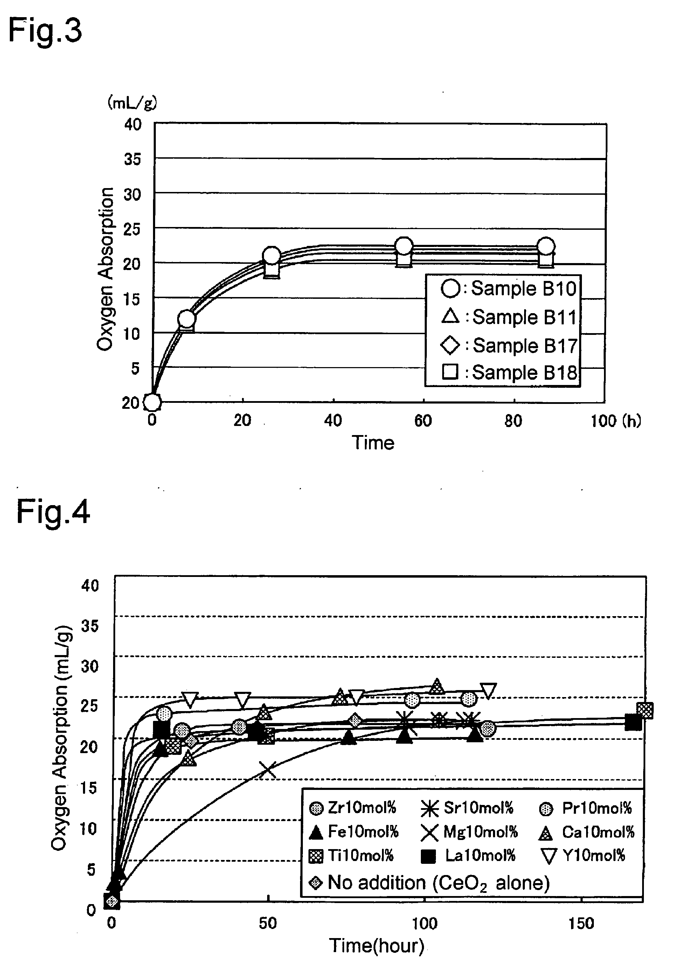

Samples A5, B10, B11, B 17, and B 18 as representatives of the above prepared samples A1 to A6 (powders) and B1 to B 18 (formed bodies) were allowed to stand in the air at room temperature and weighed at prescribed time intervals to measure the oxygen absorption (oxygen-deficient cerium oxide absorbs only oxygen). The results obtained are graphically shown in Figs. 2 and 3.

The results in Figs. 2 and 3 provide confirmation that samples A5, B10, B11, B 17, and B 18 have sufficient oxygen absorbing capability and are useful as an oxygen absorber. It would be safe to assume, from these results, that other samples A1 to A4, A6, B1 to B9, and B12 to B16 have sufficient oxygen absorbing capability and are useful as an oxygen absorber.

As shown in Fig.2, the deoxidizing capability of titanium oxide (TiO₂), which is indicated by mark x, was about one-sixth of that of cerium oxide (CeO₂).

### 2-2. Specific surface area measurement, and ignition test upon opening enclosed products.

The specific surface area of the samples A1 to A6 (powders) and B1 to B18 (formed bodies) was measured by the 5-point BET method (degassing temperature: 120°C; degassing time: 15 mins). Then, samples A1 to A5 (powders) and B1 to B 18 (formed bodies) were prepared by reducing-firing each of the fired powders A1 to A6 and sintered bodies B1 to B18 and enclosing the product in the composite film in the same manner as described above. The composite film of each of the samples was opened in the air, and the deoxidizer was taken out and put on a stainless steel tray in the air to see if it ignited with the naked eye. The results obtained are shown in Tables 4 and 5 below.

The specific surface area measurement was carried out using SA-3100 from Beckman Coulter.

**Table 4**

| Sample | Specific Surface Area (m²/g) | Ignition* |
|---|---|---|
| A1 | 4.084 | yes |
| A2 | 1.831 | yes |
| A3 | 0.999 | yes |
| A4 | 0.622 | yes |
| A5 | 0.585 | no |
| A6 | below detection limit | no |

| | | |
|---|---|---|
| * "yes" means ignition occurred, and "no" means ignition did not occur. | | |

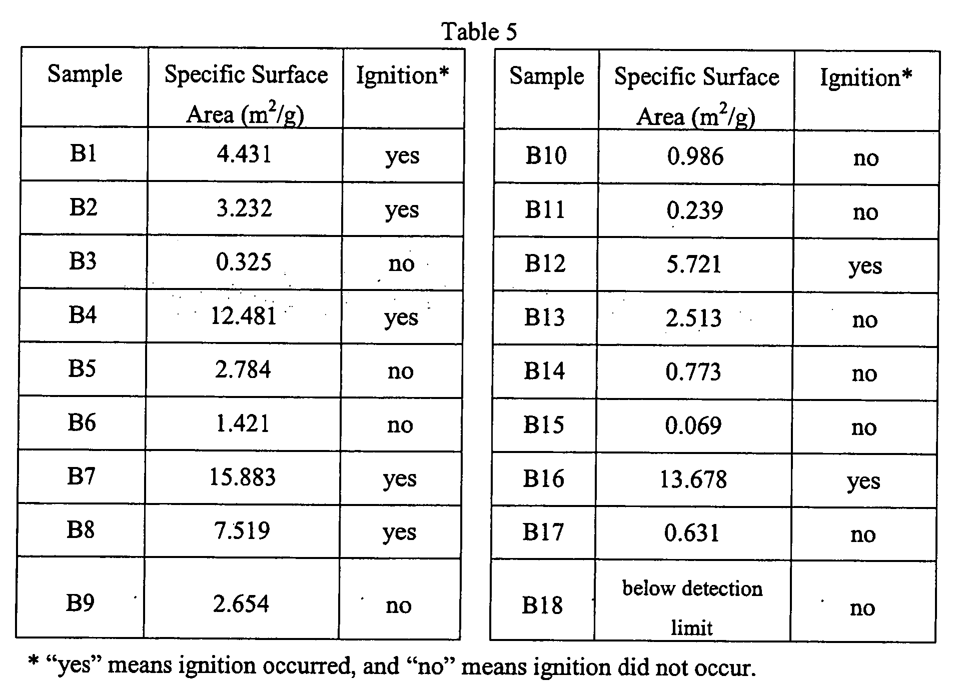

It is seen from Table 4 that samples A1 to A4 of powder form having a specific surface area exceeding 0.6 m²/g abruptly reacted with oxygen and ignited on direct exposure to air. In contrast, samples A5 and A6 having a specific surface area of not more than 0.6 m²/g did not ignite on direct exposure to air. It is seen from Table 5 that samples B1, B2, B4, B7, B8, B12, and B16 of formed body form having a specific surface area exceeding 3.0 m²/g abruptly reacted with oxygen and ignited on direct exposure to air, whereas samples B3, B5, B6, B9 to B11, B 13 to B 15, B 17, and B 18 having a specific surface area of not more than 3.0 m²/g did not ignite on direct exposure to air.

### 2-3. Microwaving test

A fireproof insulating brick from Isolite Insulating Products Co., Ltd. was placed in a microwave oven (NE-S330F from NATIONAL), and samples A5 (powder) and B5 (formed body) were put thereon and irradiated with microwaves (700 W) for 3 minutes. The samples were taken out of the microwave oven, and their temperature was measured. While the temperature before microwaving was 27°C, the temperature after microwaving was 30°C, proving that samples A5 (powder) and B5 (formed body) did not heat when microwaved.

It was thus confirmed that the deoxidizer can be prevented from igniting even if the composite film covering the deoxidizer is opened by mistake as long as the specific surface area is 0.6 m²/g or less in the case of powder or 3.0 m²/g or less in the case of formed body.

### Example 2

The effects of the deoxidizers according to the second embodiment of the invention and the process of producing the same were confirmed by the following confirming tests. The present invention is not construed as being limited to these tests.

### Preparation of starting material

Ammonium hydrogencarbonate, ammonia, ammonium carbonate, and tartaric acid were dissolved in water, and a cerium nitrate aqueous solution was added thereto dropwise while stirring to conduct back neutralization. The precipitate thus formed was washed twice with ion-exchanged water, filtered, and dried at 300°C for 2 hours to give cerium oxide (CeO₂) powder having an average particle size of about 0.5 µm(This procedure is applied to the preparation of cerium oxide alone without dopant elements).

### Dopant elements

When the cerium nitrate aqueous solution was added dropwise in the preparation of cerium oxide powder, each of titanium (Ti), iron (Fe), zirconium (Zr), magnesium (Mg), yttrium (Y), calcium (Ca), praseodymium (Pr), lanthanum (La), and yttrium (Y) was added as a dopant element in the form of a nitrate in an amount of 10 mol%.

The resulting composite oxide powder was pressed under a pressing condition of 1 t/cm² into a 20 mm diameter tablet (formed body). The formed body was sintered at 1100°C for 1 hour and then subjected to reduction firing at 1000°C for 1 hour under a flow of 400 sccm of 100% hydrogen gas. The resulting deoxidizer was enclosed in an inner bag with many pinholes which is used for a commercial deoxidizer WONDERKEEP.

The oxygen absorbing capability of the cerium oxide with various dopant elements is graphically shown in Fig. 4. As shown in Fig. 4, a remarkable increase of oxygen absorption is observed when cerium oxide is doped with yttrium (Y), calcium (Ca) or praseodymium (Pr) as compared with cerium oxide used alone.

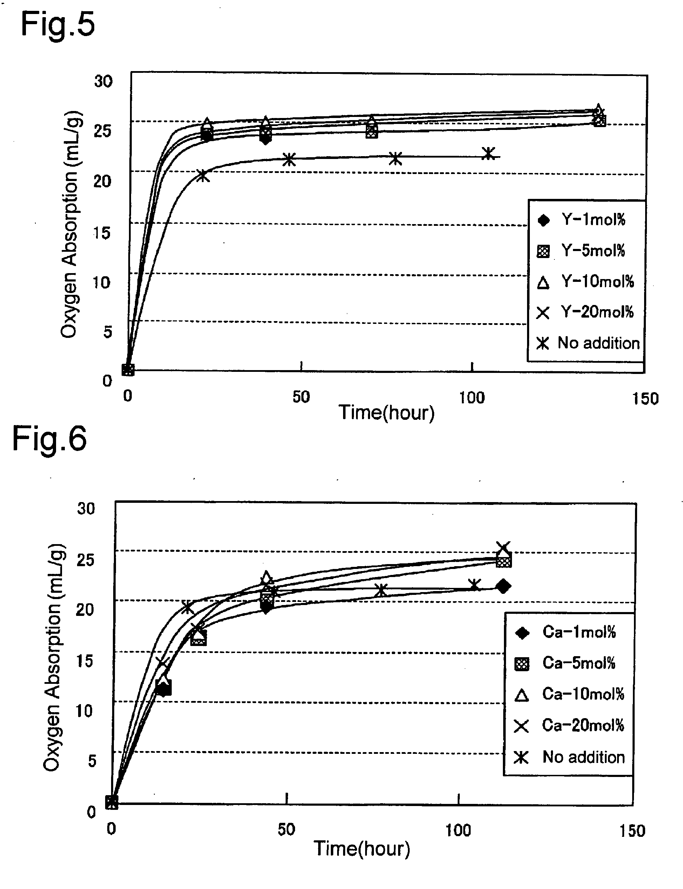

Oxygen absorptions were also measured with the amount of yttrium (Y), calcium (Ca) and praseodymium (Pr) as a dopant element varied (1 mol%, 5 mol%, 10 mol% or 20 mol%). The results obtained are graphed in Figs. 5 through 7.

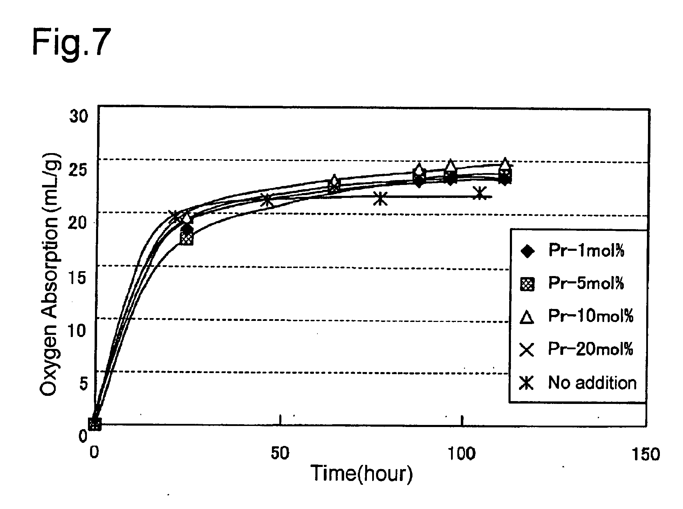

As shown in Figs. 5 and 7, an increase of oxygen absorption was confirmed with yttrium (Y) and praseodymium (Pr) added at any amount as compared with no addition. As shown in Fig. 6, an increase of oxygen absorption was confirmed with calcium (Ca) added at any amounts except 1 mol% as compared with no addition.

From all these results it was confirmed that good results of oxygen absorption are obtained when these dopant elements are added in an amount ranging from 1 to 20 mol%.

### Industrial Applicability

The deoxidizer according to the present invention exhibits improved deoxidizing capability over titanium oxide and is prevented from abruptly reacting with oxygen and igniting even if brought into direct exposure to the atmosphere. Therefore, it has improved handling properties as a deoxidizer and is useful with extreme industrial benefit.

## Claims

1. A deoxidizer for absorbing and removing oxygen from the surrounding atmosphere, comprising oxygen-deficient cerium oxide and having a powder form with a specific surface area of 0.6 m²/g or less.

2. A deoxidizer for absorbing and removing oxygen from the surrounding atmosphere, comprising oxygen-deficient cerium oxide and having the form of a formed body with a specific surface area of 3.0 m²/g or less.

3. A deoxidizer for absorbent and removing oxygen from the surrounding atmosphere, comprising an oxygen-deficient inorganic oxide doped with a dopant element which is capable of increasing the oxygen absorption of the inorganic oxide.

4. The deoxidizer according to claim 3, wherein the inorganic oxide is cerium oxide, and the dopant element is at least one of yttrium (Y), calcium (Ca), and praseodymium (Pr) dissolved in the cerium oxide in a solid state.

5. The deoxidizer according to claim 3, wherein the inorganic oxide is cerium oxide, and the dopant element is at least one of yttrium (Y), calcium (Ca), and praseodymium (Pr) dissolved in an amount of 1 to 20 mol% in cerium oxide in a solid state.

6. The deoxidizer according to claim 3, having a powder form with a specific surface area of 0.6 m²/g or less.

7. The deoxidizer according to claim 3, having the form of a formed body with a specific surface area of 3.0 m²/g or less.

8. A process of producing the deoxidizer according to claim 1, comprising the steps of firing CeO₂ powder at a temperature of 1400°C or higher and subjecting the fired powder to reduction firing.

9. A process of producing the deoxidizer according to claim 2, comprising the steps of forming CeO₂ powder under a pressure of 0.5 t/cm² or more into a formed body, sintering the formed body at a temperature of 1000°C or higher, and subjecting the sintered body to reduction firing.

10. The process of producing the deoxidizer according to claim 3, comprising the steps of firing a composite inorganic oxide containing a dopant element increasing an oxygen absorption at a temperature of 1000°C or higher, subjecting the fired product to reduction firing, and sealing the product in a packet.

11. The process according to claim 10, further comprising the step of pressing the composite inorganic oxide into a formed body before the step of firing at a temperature of 1000°C or higher.

12. The process according to claim 10, wherein the inorganic oxide is cerium oxide, and the dopant element is at least one of yttrium (Y), calcium (Ca), and praseodymium (Pr) dissolved in the cerium oxide in a solid state.

13. A deoxidizer packet comprising a casing and a deoxidizer in the casing, the deoxidizer comprising oxygen-deficient cerium oxide powder having a specific surface area of 0.6 m²/g or less.

14. A deoxidizer packet comprising a casing and a deoxidizer in the casing, the deoxidizer comprising a formed body of oxygen-deficient cerium oxide, the formed body having a specific surface area of 3.0 m²/g or less.

15. A deoxidizing film comprising a deoxidizer layer comprising oxygen-deficient cerium oxide powder having a specific surface area of 0.6 m²/g or less, a gas barrier layer having gas barrier properties and provided on the outer side of the deoxidizer layer, and a gas permeable layer having gas permeability and provided on the inner side of the deoxidizer layer.

16. A deoxidizing resin composition comprising a resin having gas permeability and a deoxidizer dispersed or kneaded into the resin, the deoxidizer comprising oxygen-deficient cerium oxide powder having a specific surface area of 0.6 m²/g or less.

17. A deoxidizer packet comprising a casing and a deoxidizer in the casing, the deoxidizer comprising an oxygen-deficient inorganic oxide doped with a dopant element increasing the oxygen absorption of the inorganic oxide.

18. The deoxidizer packet according to claim 17, wherein the inorganic oxide is cerium oxide, and the dopant element is at least one of yttrium (Y), calcium (Ca), and praseodymium (Pr) dissolved in the cerium oxide in a solid state.

19. A deoxidizing film comprising a deoxidizer layer, a gas barrier layer having gas barrier properties and provided on the outer side of the deoxidizer layer, and a gas permeable layer having gas permeability and provided on the inner side of the deoxidizer layer, the deoxidizer layer comprising an oxygen-deficient inorganic oxide doped with a dopant element increasing the oxygen absorption of the inorganic oxide.

20. The deoxidizing film according to claim 19, wherein the inorganic oxide is cerium oxide, and the dopant element is at least one of yttrium (Y), calcium (Ca), and praseodymium (Pr) dissolved in the cerium oxide in a solid state.

21. A deoxidizing resin composition comprising a resin having gas permeability and a deoxidizer dispersed or kneaded into the resin, the deoxidizer comprising an oxygen-deficient inorganic oxide doped with a dopant element increasing the oxygen absorption of the inorganic oxide.

22. The deoxidizing resin composition according to claim 21, wherein the inorganic oxide is cerium oxide, and the dopant element is at least one of yttrium (Y), calcium (Ca), and praseodymium (Pr) dissolved in the cerium oxide in a solid solution.
